# EUROPÄISCHE PATENTSCHRIFT

(11) **EP 3 704 000 B1**
(45) Veröffentlichungstag und Bekanntmachung des Hinweises auf die Patenterteilung: **15.12.2021**
(21) Anmeldenummer: 18705400.2
(22) Anmeldetag: 15.02.2018
(51) Int. Cl.: B60L 50/60, B60L 50/53, B62D 65/18

(54) **VERFAHREN UND FAHRZEUG ZUM FÖRDERN EINES ELEKTRISCH ANGETRIEBENEN KRAFTFAHRZEUGS WÄHREND DESSEN MONTAGE**
METHOD AND VEHICLE FOR CONVEYING AN ELECTRICALLY DRIVEN MOTOR VEHICLE DURING ASSEMBLY THEREOF
PROCÉDÉ ET VÉHICULE PERMETTANT DE TRANSPORTER UN VÉHICULE AUTOMOBILE À PROPULSION ÉLECTRIQUE PENDANT SON MONTAGE

(30) Priorität: 29.03.2017 DE 102017106731
(43) Veröffentlichungstag der Anmeldung: 09.09.2020
(73) Patentinhaber: Eisenmann GmbH, 71032 Böblingen (DE)
(72) Erfinder: ROBBIN, Jörg, 72119 Ammerbuch (DE); HERWIG, Gernot, 71088 Holzgerlingen (DE)
(74) Vertreter: Ostertag & Partner Patentanwälte mbB
(86) Internationale Anmeldenummer: PCT/EP2018/053822
(87) Internationale Veröffentlichungsnummer: WO 2018/177650

(56) Entgegenhaltungen:
- EP-A1- 0 285 527
- WO-A1-2005/014375
- DE-A1-102012 016 519
- Cars Garage: "BMW I3 Production - Leipzig", , 8 December 2016 (2016-12-08), page 1, XP054981692, Retrieved from the Internet: URL:https://www.youtube.com/watch?v=HGi-Km YGuZE [retrieved on 2021-04-20]

## Beschreibung

### HINTERGRUND DER ERFINDUNG

### 1. Gebiet der Erfindung

Die Erfindung betrifft ein Verfahren und ein Fahrzeug zum Fördern eines elektrisch angetriebenen Kraftfahrzeugs, und zwar insbesondere eines Personen- oder Lastkraftwagens, während dessen Montage. Das Förderfahrzeug kann beispielsweise ein fahrerloses Transportfahrzeug, eine Montageplattform mit eigenem Antrieb oder ein Fahrzeug eines Hängebahnsystems sein.

### 2. Beschreibung des Standes der Technik

Bei der Montage von Kraftfahrzeugen in Fertigungsstätten werden Fördersysteme eingesetzt, welche die Aufgabe haben, die Kraftfahrzeuge zwischen aufeinander folgenden Bearbeitungsstationen zu fördern. Bei Kraftwagen werden beispielsweise in unterschiedlichen Bearbeitungsstationen Achsen, Antriebswellen, Stoßdämpfer, Bremsen und weitere Teile zu einem Fahrwerk zusammengebaut. In anderen Bearbeitungsstationen werden in die lackierte Karosserie elektrische Kabelstränge und die Innenausstattung eingebaut. Auch nach dem häufig als "Hochzeit" bezeichneten Zusammenführen des Fahrwerks mit der Karosserie sind noch viele weitere Montageschritte in den Bearbeitungsstationen durchzuführen, z. B. die Anbringung von Türen und Klappen. Der sich in der Montage befindenden Kraftwagen wird dabei manchmal mehrfach zwischen unterschiedlichen Fördersystemen umgesetzt.

Die Wahl des Fördersystems hängt u.a. von der Art der durchzuführenden Montageschritte und dem Fortschritt der Montage ab. Vor allem bei Montageschritten, die manuell von Werkern durchzuführen sind, werden Förderfahrzeuge eingesetzt, die eine für Werker begehbare Montageplattform haben. Meist haben Förderfahrzeuge mit begehbaren Montageplattformen keinen eigenen Antrieb, sondern bilden während der Förderung einen Schubverband, der von seitlich angreifenden externen Reibrädern angetrieben wird. Inzwischen sind auch Förderfahrzeuge mit begehbaren Montageplattformen bekannt, die einen eigenen Antrieb haben. Beschrieben sind solche Förderfahrzeuge beispielsweise in der DE 40 20 286 C2 und der DE 10 2005 034 582 A1.

Zur Förderung von Kraftfahrzeugen während der Montage sind auch fahrerlose Transportsysteme (FTS) bekannt, die mehrere fahrerlose Transportfahrzeuge, eine Leitsteuerung sowie Einrichtungen zur Lageerfassung der Transportfahrzeuge und zur Kommunikation zwischen den Transportfahrzeugen und der Leitsteuerung umfassen.

Aus der DE 2017 103 931 A1 ist ein Fördersystem bekannt, bei dem solche fahrerlosen Transportfahrzeuge zusätzlich über eine begehbare Montageplattform verfügen und individuell unterschiedliche Abfolgen von Bearbeitungsstationen abfahren können.

Verbreitet sind außerdem schienengebundene Fördersysteme, die auch als Hängebahn ausgebildet sein können.

Da Kraftfahrzeuge in der Regel ein hohes Gewicht haben, müssen auch die Förderfahrzeuge massiv gebaut sein, die zur Förderung der Kraftfahrzeuge während der Montage verwendet werden. Obwohl die Fördergeschwindigkeiten niedrig sind, benötigen die schwer beladenen Förderfahrzeuge viel Antriebsenergie. Da die Verwendung von Verbrennungsmotoren in Montagehallen nicht möglich ist, werden die Förderfahrzeuge deswegen in aller Regel von Elektromotoren angetrieben. Die Stromversorgung erfolgt bei spurgebundenen Förderfahrzeugen häufig über Schleifkontakte, die an Schleifleitungen anliegen. Diese können im Boden verlegt sein oder entlang einer Tragschiene verlaufen. Nicht spurgebundene Förderfahrzeuge hingegen verfügen meist über eine eigene Batterie, die regelmäßig aufgeladen werden muss.

Die Übertragung von Strom über Schleifleitungen bei spurgebundenen Fördersystemen ist allerdings mit einem hohen Installationsaufwand verbunden. Die Mitführung von Batterien bei nicht spurgebundenen Förderfahrzeugen Fahrzeugen ist ebenfalls mit Nachteilen verbunden, weil die Batterien teuer und schwer sind und außerdem die Verfügbarkeit der Förderfahrzeuge wegen der notwendigen Ladevorgänge einschränken.

Die gleichen Probleme stellen sich auch beim Fördern von elektrisch angetriebenen Kraftfahrzeugen während der Montage. Da die Traktionsbatterien teilweise ein höheres Gewicht haben als Verbrennungsmotoren, ist auch beim Fördern von elektrisch angetriebenen Kraftfahrzeugen die Energieversorgung der Förderfahrzeugen mit elektrischer Energie bislang noch nicht zufriedenstellend gelöst.

Aus der DE 10 2012 016 519 A1 ist eine Steuervorrichtung bekannt, die bei der Montage eines elektrisch betriebenen Kraftfahrzeugs von unten vor den Vorderrädern positioniert wird. Über eine Schnittstelle wird die Steuervorrichtung mit dem Bussystem des Kraftwagens und mit dessen Spannungsversorgung verbunden, so dass die Steuervorrichtung keine eigene Energiequelle benötigt. Um den Kraftwagen steuern zu können, verfügt die Steuervorrichtung über einen als Magnetlineal ausgebildeten Sensor, der mit einem Raster von im Boden verlegte Magneten zusammenwirkt. Der Kraftwagen kann dadurch, gesteuert von der Steuereinrichtung und unter Verwendung des Magnetrasters, selbsttätig die nächste Bearbeitungsstation anfahren.

Die EP 0 285 527 A1 offenbart ein Fördersystem mit selbsttätig fahrenden, elektrisch angetriebenen Förderfahrzeugen.

Die WO 2005/014375 A1 betrifft eine elektrisch betriebene Transportvorrichtung zum Transport von Kraftfahrzeugen während ihrer Montage. Die Transportvorrichtung ist mit dem Bordnetz der Kraftfahrzeuge koppelbar, um dieses mit elektrischer Energie zu versorgen.

### ZUSAMMENFASSUNG DER ERFINDUNG

Aufgabe der Erfindung ist es, die Förderung eines elektrisch angetriebenen Kraftfahrzeugs während dessen Montage mit dem Ziel geringerer Kosten und einer höheren Effizienz zu verbessern.

Erfindungsgemäß wird diese Aufgabe durch ein Förderverfahren gelöst, bei dem ein Förderfahrzeug ein elektrisch angetriebenes Kraftfahrzeug während der Montage des Kraftfahrzeugs fördert. Erfindungsgemäß nutzt das Förderfahrzeug Energie, die in einer Traktionsbatterie des Kraftfahrzeugs gespeichert ist.

Anstatt somit Förderfahrzeuge zu verwenden, die über eine eigene große und schwere Batterie verfügen, nutzt das erfindungsgemäße Förderfahrzeug die ohnehin vorhandene Traktionsbatterie des zu fördernden Kraftfahrzeugs. Das Förderfahrzeug benötigt folglich selbst keine eigene Batterie mehr oder nur noch eine vergleichsweise kleine Batterie. Alternativ hierzu kann das Förderfahrzeug eine eigene Batterie bisheriger Größe behalten. Diese muss jedoch wesentlich seltener aufgeladen werden, wodurch sich die Verfügbarkeit des Förderfahrzeugs erheblich erhöht.

Im Falle von spurgebundenen Förderfahrzeugen, die häufig nicht über eine eigene Batterie verfügen, kann auf eine Energieversorgung über Schleifkontakte und Schleifleiter vollständig verzichtet werden. Dies führt zu erheblichen Einsparungen der Installationskosten. Auch in diesem Fall ist es allerdings in der Regel zweckmäßig, auf den Förderfahrzeugen kleine Batterien vorzusehen.

Unter einem "Kraftfahrzeug" wird im vorliegenden Zusammenhang jede Baugruppe verstanden, die bereits über eine Traktionsbatterie verfügt und im Verlauf der Montage zu einem vollständigen und funktionsfähigen Kraftfahrzeug ergänzt wird.

Besonders bevorzugt ist es, wenn das Förderfahrzeug einen eigenen elektrischen Antrieb hat und die in der Traktionsbatterie des Kraftfahrzeugs gespeicherte Energie zur Versorgung des Antriebs nutzt. Eine vom Förderfahrzeug mitgeführte kleinere Batterie wird dann nur benötigt, um auch während der vergleichsweise kurzen Zeiten beweglich zu sein, während denen das Förderfahrzeug kein elektrisch angetriebenes Kraftfahrzeug fördert.

Die in der Traktionsbatterie gespeicherte elektrische Energie kann aber zusätzlich oder alternativ auch für andere Zwecke als zum Antrieb des Förderfahrzeugs genutzt werden. Als Energieverbraucher in Betracht kommen dabei beispielsweise Hilfskomponenten des Förderfahrzeugs, die der Navigation, Steuerung oder Kommunikation mit einer übergeordneten Systemsteuerung dienen, sowie Hubtische oder andere Verfahreinrichtungen, mit denen sich das Kraftfahrzeug relativ zu einem Fahrwerk des Förderfahrzeugs anheben, drehen oder in sonstiger Weise verfahren lässt. Wenn das Förderfahrzeug eine für Werker begehbare Montageplattform hat, kann ein von den Werkern auf der Montageplattform verwendetes Werkzeug ebenfalls die in der Traktionsbatterie des Kraftfahrzeugs gespeicherte Energie nutzen. Da der Antrieb des Förderfahrzeugs in der Regel jedoch deutlich mehr elektrische Energie verbraucht als diese Hilfskomponenten oder Werkzeuge, sind die mit der Erfindung erzielten Vorteile bei einer Nutzung der Traktionsbatterie des geförderten Kraftfahrzeugs für den elektrischen Antrieb besonders signifikant.

Vor allem dann, wenn ein es sich bei dem Förderfahrzeug um ein fahrerloses Transportfahrzeug handelt, das individuell unterschiedliche Abfolgen von Bearbeitungsstationen abfahren kann, ist eine Versorgung mit elektrischer Energie über Schleifleitungen oder Induktion sehr aufwändig oder sogar unmöglich. Die Nutzung der Traktionsbatterie des geförderten Kraftfahrzeugs ist dann besonders vorteilhaft. Solche fahrerlosen Transportfahrzeuge können einen omnidirektionalen Antrieb haben, mit dem das Transportfahrzeug aus dem Stand heraus in eine beliebige Richtung fahren kann.

Die Nutzung der in der Traktionsbatterie gespeicherten elektrischen Energie durch das Förderfahrzeug kann bereits zu einem Zeitpunkt beginnen, bevor die Traktionsbatterie in eine Karosserie des Kraftfahrzeugs eingebaut wird. Je früher die Nutzung der Traktionsbatterie durch das Förderfahrzeug beginnt, desto kleiner kann die Batterie dimensioniert werden, die im Förderfahrzeug vorzuhalten ist, wenn selbstständige Bewegungen auch dann möglich sein sollen, wenn gerade kein Kraftfahrzeug gefördert wird.

Gegenstand der Erfindung ist außerdem ein Förderfahrzeug zum Fördern eines elektrisch angetriebenen Kraftfahrzeugs während der Montage des Kraftfahrzeugs. Erfindungsgemäß ist das Förderfahrzeug dazu eingerichtet ist, Energie zu nutzen, die in einer Traktionsbatterie des Kraftfahrzeugs gespeichert ist. Zu diesem Zweck weist das Förderfahrzeug eine elektrische Schnittstelle auf, die dazu eingerichtet ist, mit der Traktionsbatterie des Kraftfahrzeugs verbunden zu werden. Ferner verfügt das Förderfahrzeug über eine Anpassungseinheit, die dazu eingerichtet ist, eine von der Traktionsbatterie bereitgestellte elektrische Spannung an ein Bordnetz des Förderfahrzeugs anzupassen. Die zum Verfahren aufgeführten Vorteile und weiterführenden Überlegungen gelten insoweit entsprechend.

Bei der elektrischen Schnittstelle kann es sich beispielsweise um eine Buchse handeln, in die ein Stromkabel eingesteckt werden kann, das mit der Traktionsbatterie verbunden wird. Im Betracht kommt jedoch auch eine schnurlose Übertragung der elektrischen Energie über Induktion oder ein Stecker, der direkt in eine an der Traktionsbatterie ausgebildete Buchse eingreift, sobald die Traktionsbatterie montiert wird.

Die Anpassungeinheit ist erforderlich, da es in der Regel nicht möglich ist, die Traktionsbatterie unmittelbar an das Bordnetz des Förderfahrzeugs anzuschließen. Hierzu muss erst dafür gesorgt werden, dass die elektrischen Parameter (Spannung, Frequenz) des Bordnetzes mit denen der Traktionsbatterie in Übereinstimmung gebracht werden.

Die Anpassungseinheit wird meist einen Stromrichter aufweisen, der dazu eingerichtet ist, eine von der Traktionsbatterie über die elektrische Schnittstelle bereitgestellte elektrische Spannung herabzusetzen. Ein Herabsetzen der Spannung mit Hilfe eines Stromrichters ist in der Regel erforderlich, da die Traktionsbatterien von Kraftwagen eine Gleichspannung erzeugen, die in der Regel in der Größenordnung von einigen Hundert Volt liegt. Aus Sicherheitsgründen dürfen die Förderfahrzeuge hingegen nur mit einer deutlich niedrigeren Spannung betrieben werden, z. B. 24 Volt oder 48 Volt. Falls das Förderfahrzeug Gleichspannung benötigt, kann es sich bei dem Stromrichter um einen Gleichspannungswandler handeln. Falls das Förderfahrzeug hingegen Wechselstrom benötigt, ist als Stromrichter ein Wechselrichter einzusetzen.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: ein Fördersystem zum Fördern von Kraftwagen, bei dem mehrere Förderfahrzeuge unabhängig voneinander zwischen Bearbeitungsstationen verkehren;
- Figur 2: eine perspektivische Darstellung eines erfindungsgemäßen Förderfahrzeugs zum Fördern von Kraftwagen gemäß einem ersten Ausführungsbeispiel, bei dem das Förderfahrzeug eine für Werker begehbare Montageplattform hat;
- Figur 3: eine perspektivische Darstellung eines erfindungsgemäßen Förderfahrzeugs zum Fördern von Kraftwagen gemäß einem zweiten Ausführungsbeispiel, bei dem das Förderfahrzeug keine für Werker begehbare Montageplattform hat;
- Figur 4: eine perspektivische Darstellung eines erfindungsgemäßen Förderfahrzeugs zum Fördern von Kraftwagen gemäß einem dritten Ausführungsbeispiel, bei dem das Förderfahrzeug zunächst nur eine Traktionsbatterie des Kraftwagens fördert;
- Figur 5: das in der Figur 4 gezeigte Förderfahrzeug nach Montage der Karosserie des Kraftwagens;
- Figur 6: eine perspektivische Darstellung eines erfindungsgemäßen Förderfahrzeugs zum Fördern von Kraftwagen gemäß einem vierten Ausführungsbeispiel, bei dem das Förderfahrzeug Teil eines Einschienenbahnsystems ist;
- Figur 7: eine perspektivische Darstellung eines erfindungsgemäßen Förderfahrzeugs zum Fördern von Kraftwagen gemäß einem fünften Ausführungsbeispiel, bei dem das Förderfahrzeug Teil eines Schienenhängebahnsystems ist.

### BESCHREIBUNG BEVORZUGTER AUSFÜHRUNGSBEISPIELE

### 1. Erstes Ausführungsbeispiel

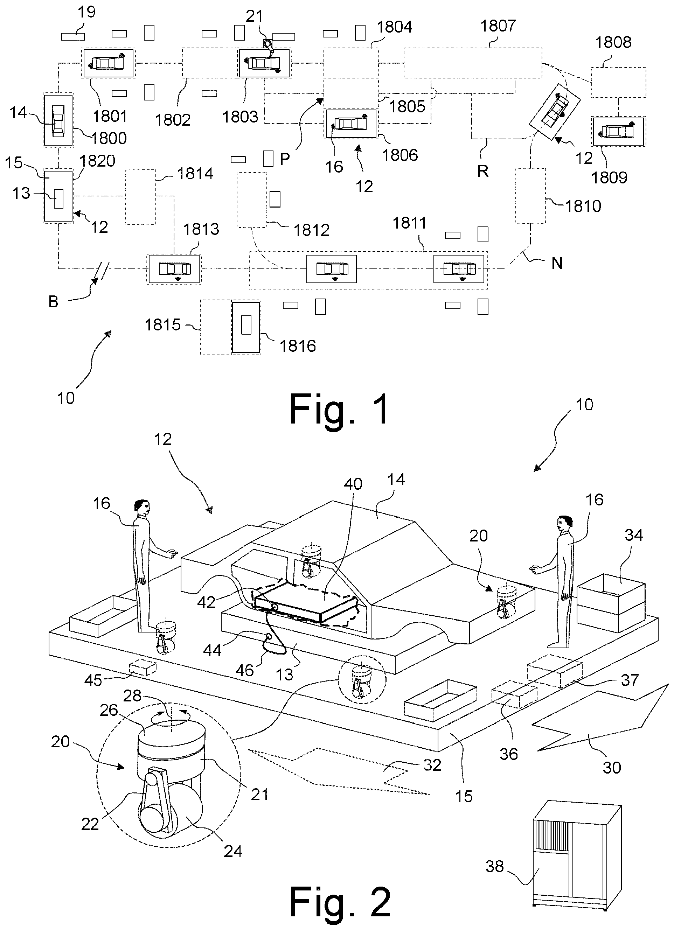

Die Figur 1 zeigt in einer schematischen Draufsicht ein erfindungsgemäßes Fördersystem 10 gemäß einem ersten Ausführungsbeispiel. Das Fördersystem 10 umfasst mehrere fahrerlose Transportfahrzeuge 12, die jeweils eine Halterung 13 für zu fördernde Kraftwagen 14 und eine Montageplattform 15 aufweist, die für Werker 16 begehbar ist. Die Transportfahrzeuge 12 fahren im dargestellten Ausführungsbeispiel frei in einem Fahrwegnetz N, in dem sie sich mit Hilfe von Navigationseinrichtungen wie zum Beispiel funkbasierten Navigationssystemen, Laserscannern, Kameras oder Ultraschallsensoren orientieren. Die Transportfahrzeuge 12 können dabei individuell unterschiedliche Abfolgen von Bearbeitungsstationen 1801 bis 1816 anfahren. Rechtecke 19 deuten in der Figur 1 Vorratsbehälter für zu montierende Teile oder andere Materialien an.

In einer Aufnahmestation 1800 werden die Transportfahrzeuge 12 mit den noch fertig zu montierenden Kraftwagen 14 beladen. Die Bearbeitungsstationen 1801 bis 1816 sind teilweise hintereinander, teilweise parallel zueinander angeordnet und müssen nicht von allen Transportfahrzeugen 12 angefahren werden.

Bei dem in der Figur 1 dargestellten Fördersystem wird angenommen, dass die Werker 16 das Transportfahrzeug 12 erst betreten, nachdem es in der Aufnahmestation 1800 einen Kraftwagen 14 aufgenommen und die erste Bearbeitungsstation 1801 erreicht hat. Das Transportfahrzeug 12 bleibt in dieser ersten Bearbeitungsstation 1801 so lange stehen, bis die dort vorgesehene Bearbeitung abgeschlossen ist. Die Werker 16 können dies durch eine Eingabeeinrichtung am Transportfahrzeug 12 signalisieren. Alternativ hierzu kann auch ein fester Takt vorgegeben sein, nach dessen Ende das Fahrzeug 12 aus der ersten Bearbeitungsstation 1801 herausfährt. Die Werker 16 können nun auf dem Transportfahrzeug 12 verbleiben und die Bearbeitung fortsetzen, während es zur nächsten Bearbeitungsstation 1802 vorrückt.

In der dritten Bearbeitungsstation 1803 unterstützt ein Roboter 21 die Bearbeitung. Die dritte Bearbeitungsstation 1803 befindet sich am Eingang eines Parallelbereichs P, der drei zueinander parallele Bearbeitungsstationen 1804, 1805 und 1806 umfasst. In diesen Bearbeitungsstationen werden Bearbeitungsschritte vorgenommen, die nicht bei allen Kraftwagen 14 erforderlich sind. Zum Anfahren der Bearbeitungsstationen 1805, 1806 kann das Transportfahrzeug 12 um eine vorgegebene Distanz seitlich versetzt werden.

In die darauf folgende Bearbeitungsstation 1807 können mehrere Transportfahrzeuge 12 einfahren und gleichzeitig bearbeitet werden. Sie können dort während der Bearbeitung entweder mit langsamer Geschwindigkeit ihre Fahrt fortsetzen oder an einer geeigneten Position stehen bleiben. Sollte bei einem Kraftwagen 14 die Bearbeitung in einer Bearbeitungsstation unerwartet lange dauern, so kann das Transportfahrzeug 12, welches den betreffenden Kraftwagen 14 transportiert, den Bearbeitungsbereich 1807 verlassen und über eine Rücklaufstrecke R erneut dem Bearbeitungsbereich 1807 zugeführt werden. Dadurch müssen Transportfahrzeuge 12 nicht auf den Abschluss der Bearbeitung eines Kraftwagens 14 warten, der von einem vorausfahrenden Transportfahrzeug 12 transportiert wird.

Rechts in der Figur 1 sind zwei Bearbeitungsstationen 1808, 1809 erkennbar, die einer Nachbearbeitung dienen. Diese Bearbeitungsstationen 1808, 1809 werden nur von solchen Transportfahrzeugen 12 angefahren, bei denen die Werker 16 festgestellt haben, dass der davon transportierte Kraftwagen 14 einen Defekt aufweist.

Die darauf folgenden Bearbeitungsstationen 1810 und 1811 werden wieder von allen Transportfahrzeugen 12 angefahren. Die Bearbeitungsstation 1812 hingegen wird nur von bestimmten Transportfahrzeugen 12 angefahren und nach der Bearbeitung wieder rückwärts verlassen.

Darauf folgt die Bearbeitungsstation 1813, von der aus die Transportfahrzeuge 12 entweder direkt oder über eine weitere Bearbeitungsstation 1814 an eine Abgabestation 1820 fahren, in welcher der Kraftwagen 14 abgenommen wird.

Mit zwei schräg gestellten Strichen ist in der Figur 1 eine Blockade B angedeutet, die sich auf der direkten Wegstrecke zwischen der Bearbeitungsstation 1813 und der Abgabestation 1820 befindet. Die Transportfahrzeuge 12 können deswegen diesen Teil des Fahrwegnetzes N nicht nutzen. Deswegen werden alle Transportfahrzeuge 12 ausnahmsweise über die Bearbeitungsstation 1814 geführt.

Unten in der Figur 1 sind noch zwei weitere Bearbeitungsstationen 1815 und 1816 angedeutet. Diese Bearbeitungsstationen dienen allerdings nicht der Bearbeitung der Kraftwagen 14, sondern stellen Reparaturstationen für die Transportfahrzeuge 12 dar.

Die Figur 2 zeigt in einer perspektivischen Darstellung ein einzelnes Transportfahrzeug 12, das Teil des in der Figur 1 gezeigten Fördersystems 10 ist. Das Transportfahrzeug 12 verfügt über einen eigenen omnidirektionalen Antrieb, der im dargestellten Ausführungsbeispiel vier Fahr-Dreh-Module 20 umfasst. Wie in der vergrößerten Darstellung erkennbar ist, weist jedes Fahr-Dreh-Modul 20 eine Motoreinheit 21 und ein über einen Riemen 22 angetriebenes Antriebsrad 24 auf, die gemeinsam eine Antriebseinheit bilden. Diese Antriebseinheit ist relativ zu einer Halterung 26 um eine vertikale Achse 28 drehbar, wie dies an sich im Stand der Technik bekannt ist. Zur Drehung der Antriebseinheit um die vertikale Achse 28 ist ein weiterer Motor vorgesehen, der in der Figur 2 nicht dargestellt ist. Die Fahr-Dreh-Module 20 sind so in die Montageplattform 15 eingelassen, dass nur die Antriebsräder 24 nach unten vorstehen.

Befinden sich die Antriebseinheiten aller Fahr-Dreh-Module 20 in der in der Figur 2 gezeigten Drehstellung bezüglich ihrer vertikalen Achse 28, so bewegt sich das Transportfahrzeug 12 beim Drehen der Antriebsräder 24 entlang seiner Längsrichtung, wie dies durch einen Pfeil 30 angedeutet ist. Werden die Antriebseinheiten alle um 90° bezüglich ihrer vertikalen Achse 28 gedreht, so kann das Transportfahrzeug 12 aus dem Stand heraus, das heißt ohne vorherige Kurvenfahrt, senkrecht zu seiner Längsrichtung 30 fahren, wie dies in der Figur 2 durch einen gepunkteten Pfeil 32 angedeutet ist. Durch entsprechende Ansteuerung der Fahr-Dreh-Module 20 können auch Schrägfahrten oder Drehungen auf der Stelle realisiert werden.

Auf der Oberseite der Montageplattform 15 befinden sich mehrere Behälter 34, in denen zu montierenden Teile, andere Materialien oder Werkzeuge bereitgehalten werden, welche die Werker 16 für die Bearbeitung benötigen.

In die Montageplattform 15 integriert ist eine Steuereinheit 36, die mit einer zentralen Steuerungseinrichtung 38 des Fördersystems 10 drahtlos kommuniziert. Die Steuereinheit 36 umfasst ein Navigationssystem, mit dem sich das Transportfahrzeug 12 in einer Fertigungshalle orientieren kann, und eine Kollisionsvermeidungseinrichtung. Steuereinheiten 36 mit diesen Funktionen sind an und für sich von fahrerlosen Transportsystemen (FTS) bekannt, weswegen hierauf an dieser Stelle nicht näher eingegangen wird. Das Transportfahrzeug 12 ist dadurch in der Lage, sich in einer Fertigungshalle frei zwischen den Bearbeitungsstationen 1801 bis 1816 zu bewegen. Vorzugsweise ist das Transportfahrzeug 12 bei solchen Fahrten nicht an eine vorgegebene Spur gebunden. Im Prinzip kommen aber auch Steuerungen infrage, bei denen die Transportfahrzeuge 12 sich entlang vorgegebener Fahrwege bewegen, die durch im Boden verlegte Schleifleiter o. ä. vorgegeben sein können.

In die Montageplattform 15 integriert ist außerdem eine Batterie 37 integriert, die allerdings im Vergleich zu herkömmlichen freifahrenden Transportfahrzeugen klein und leicht ist und deswegen nur eine vergleichsweise geringe Kapazität hat. Die Batterie versorgt den Antrieb des Transportsfahrzeugs 12 und alle anderen elektrischen Verbraucher mit elektrischer Energie.

Die Halterung 13 des Transportfahrzeugs 12 trägt einen zu montierenden Kraftwagen 14, der elektrisch angetrieben ist. Im dargestellten Ausführungsbeispiel ist die auf der Halterung 13 befestigte Karosserie des Kraftwagens 14 noch nicht auf ein Fahrwerk aufgesetzt. Im Bereich einer Bodenplatte der Karosserie befindet sich aber bereits die Traktionsbatterie 40 des Kraftwagens 14.

Im dargestellten Ausführungsbeispiel handelt es sich bei der Traktionsbatterie 40 um einen Lithium-Ionen-Akkumulator, der eine Gleichspannung von etwa 360 V erzeugt und eine Kapazität von rund 30 kWh hat. Die Traktionsbatterie 40, die vor dem Einbau in die Karosserie des Kraftwagens 14 aufgeladen wurde, verfügt über eine spezielle Anschlussbuchse 42, die nicht für die Verbindung zu dem elektrischen Antriebsmotor des Kraftwagens 14 vorgesehen ist. An der Halterung 13 ist eine elektrische Schnittstelle 44 vorgesehen, die hier ebenfalls als Anschlussbuchse ausgebildet ist.

Nach dem Aufsetzen des Kraftwagens 14 auf das Transportfahrzeug 12 in der Aufnahmestation 1800 verbindet ein Werker 16 die Anschlussbuchse 42 der Traktionsbatterie 40 mit der elektrischen Schnittstelle 44 des Transportfahrzeugs 12 mit Hilfe eines Verbindungskabels 46. Die Steuereinheit 36 des Transportfahrzeugs 12 ist so programmiert, dass sie die an der elektrischen Schnittstelle 44 anliegende und von der Traktionsbatterie 40 erzeugte Spannung erkennt. Mit Hilfe eines Relais-Schalters werden alle elektrischen Verbraucher nun von der eigenen Batterie 37 getrennt und stattdessen mit der Traktionsbatterie 40 verbunden. Fortan beziehen der Antrieb und alle anderen elektrischen Verbraucher des Transportfahrzeugs 12 die benötigte elektrische Energie nicht mehr aus der eigenen Batterie 37, sondern aus der Traktionsbatterie 40 des Kraftwagens 14. Die eigene Batterie 37 wird somit während der gesamten Fahrt bis zum Abnehmen des Kraftwagens 14 in der Abgabestation 1820 nicht mehr beansprucht. In Betracht kommt selbstverständlich auch, die eigene Batterie 37 nicht vollständig vom Bordnetz des Transportfahrzeugs 12 zu trennen, sondern sie teilweise weiter zu nutzen.

Bei den anderen elektrischen Verbrauchern kann es sich beispielsweise um die Steuereinrichtung 36 und um die damit verbundenen Sensoren und Kommunikationseinrichtungen handeln. Von der Transportplattform 15 mitgeführt werden können außerdem Schrauber und andere Werkzeuge, die ebenfalls elektrische Energie benötigen und diese nun von der Traktionsbatterie 40 beziehen können. Daneben verfügen Transportfahrzeuge 12 häufig über Verfahreinrichtungen wie beispielsweise Hubtische, die ebenfalls elektrische Energie benötigen.

Da das Transportfahrzeug 12 aus Sicherheitsgründen nur mit Kleinspannungen von weniger als 120 Volt betrieben werden darf, verfügt es über einen Gleichspannungswandler 45, der die von der Traktionsbatterie 40 gelieferte Gleichspannung auf einen niedrigeren Wert, z.B. 48 Volt oder 96 Volt, herabsetzt. Wenn das Transportfahrzeug 12 ein Bordnetz hat, das mit einer Wechselspannung betrieben wird, ist stattdessen eine Umwandlung von Gleichspannung in eine Wechselspannung mit der vorgegebenen Frequenz erforderlich.

### 3. Weitere Ausführungsbeispiele

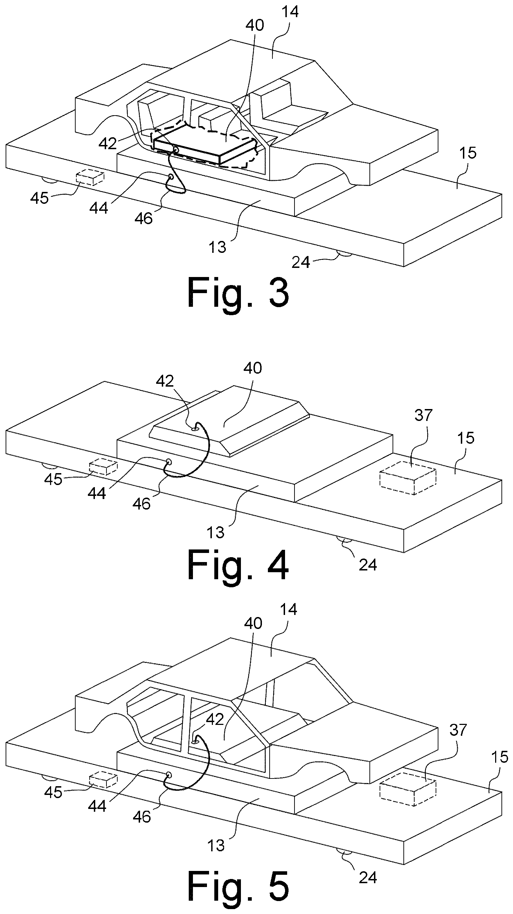

Die Figur 3 zeigt ein Transportfahrzeug 12 gemäß einem zweiten Ausführungsbeispiel, bei dem die Montageplattform 15 nicht für Werker begehbar ist. Solche Transportfahrzeuge können vor allem für den Transport von zu montierenden Kraftwagen 14 zwischen weiter auseinanderliegenden Bereichen in der Fertigungshalle oder zwischen Fertigungshallen verwendet werden. Außerdem verfügt das in der Figur 3 gezeigte Transportfahrzeug 12 nicht über eine eigene Batterie. Deswegen kann das Transportfahrzeug 12 sich ohne Kraftwagen 14 nicht selbständig bewegen, sondern wird in dieser Zeit durch ein externes Zug- oder Schubgerät gezogen bzw. angeschoben.

Die Figur 4 zeigt ein Transportfahrzeug 12 gemäß einem dritten Ausführungsbeispiel, bei dem die Halterung 13 dazu eingerichtet ist, zunächst nur die Traktionsbatterie 40 aufzunehmen. Bereits in diesem Zustand kann die Traktionsbatterie 40 mit Hilfe des Verbindungskabels 46 mit dem Transportfahrzeug 12 verbunden werden, wie dies in der Figur 4 angedeutet ist.

Wenn später die Karosserie des Kraftwagens 14 aufgesetzt wird (vgl. Figur 5), kann es erforderlich sein, kurzzeitig die elektrische Verbindung zwischen der Traktionsbatterie 40 und dem Transportfahrzeug 12 zu unterbrechen, um das Verbindungskabel 46 durch eine Öffnung der Karosserie hindurchführen zu können.

Neben einer manuell herzustellenden Verbindung mithilfe eines Verbindungskabels 46 kommen auch Steckverbindungen an der Batterie 40 und dem Transportfahrzeug 12 in Betracht, mit denen sich eine elektrische Verbindung automatisch herstellen lässt, wenn die Traktionsbatterie 40 auf die Halterung 13 aufgesetzt wird.

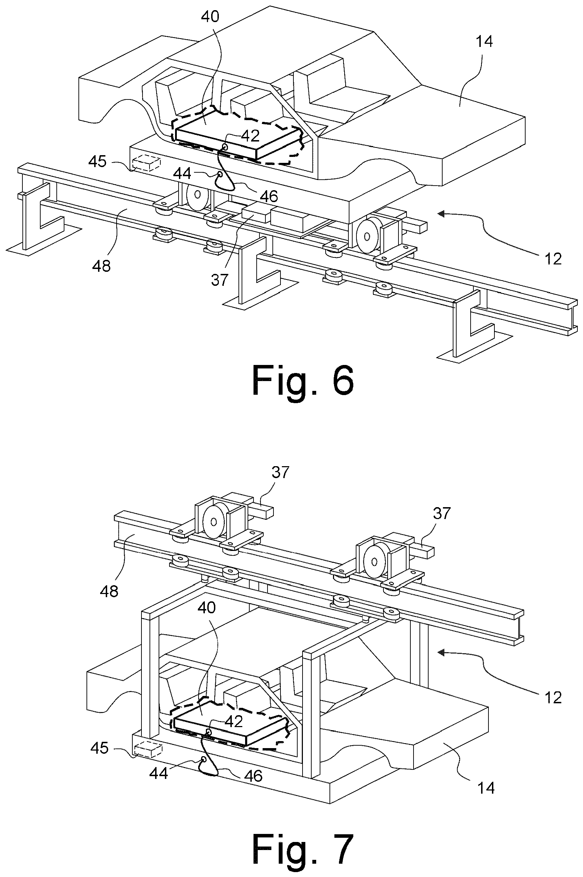

Die Figur 6 zeigt ein spurgebundenes Förderfahrzeug 12 gemäß einem vierten Ausführungsbeispiel, das Teil eines Einschienen-Fördersystems ist. Im dargestellten Ausführungsbeispiel verfügt das Förderfahrzeug 12 ebenfalls über eine kleine Batterie, nicht aber über Schleifkontakte, und auch an einer Transportschiene 48 sind keine Schleifleitungen vorgesehen, die mit den Schleifkontakten eine Stromzufuhr ermöglichen.

Das Förderfahrzeug 12 legt auch hier kürzere Leerfahrten unter Nutzung der eigenen Batterie 37 zurück. Nachdem ein Kraftwagen 14 mit darin bereits montierter Traktionsbatterie 40 aufgesetzt wurde, wird wie bei dem vorher beschriebenen Ausführungsbeispielen mit Hilfe eines Verbindungskabels 46 eine elektrische Verbindung zwischen der Traktionsbatterie 40 und dem Förderfahrzeug 12 hergestellt. Fortan nutzen die Antriebe und alle weiteren elektrischen Verbraucher des Förderfahrzeugs 12 als Energiequelle ausschließlich die Traktionsbatterie 40 des Kraftwagens 14.

Die Figur 7 zeigt ein Förderfahrzeug 12 gemäß einem fünften Ausführungsbeispiel, das sich von dem in der Figur 6 gezeigten Ausführungsbeispiel lediglich dadurch unterscheidet, dass es sich bei dem Fördersystem um eine Elektrohängebahn handelt, bei der die Förderfahrzeuge 12 hängend an einer Transportschiene 48 befestigt sind.

## Patentansprüche

1. Förderverfahren, bei dem ein Förderfahrzeug (12) ein elektrisch angetriebenes Kraftfahrzeug (14) während der Montage des Kraftfahrzeugs fördert, **dadurch gekennzeichnet, dass** das Förderfahrzeug (12) Energie nutzt, die in einer Traktionsbatterie (40) des Kraftfahrzeugs (14) gespeichert ist.

2. Verfahren nach Anspruch 1, **dadurch gekennzeichnet, dass** das Förderfahrzeug (12) einen eigenen elektrischen Antrieb (20) hat und die in der Traktionsbatterie (40) des Kraftfahrzeugs gespeicherte Energie zur Versorgung des Antriebs (20) nutzt.

3. Verfahren nach Anspruch 2, **dadurch gekennzeichnet, dass** das Förderfahrzeug ein fahrerloses Transportfahrzeug (12) ist.

4. Verfahren nach Anspruch 3, **dadurch gekennzeichnet, dass** das Transportfahrzeug (12) individuell unterschiedliche Abfolgen von Bearbeitungsstationen (1801 bis 1816) abfährt.

5. Verfahren nach einem der vorhergehenden Ansprüche, **dadurch gekennzeichnet, dass** das Förderfahrzeug (12) eine für Werker (16) begehbare Montageplattform (15) hat, und dass ein von den Werkern (16) auf der Montageplattform (15) verwendetes Werkzeug die in der Traktionsbatterie (40) des Kraftfahrzeugs (14) gespeicherte Energie nutzt.

6. Verfahren nach einem der vorhergehenden Ansprüche, **dadurch gekennzeichnet, dass** das Förderfahrzeug (12) mit der Traktionsbatterie (40) zu einem Zeitpunkt elektrisch verbunden wird, bevor die Traktionsbatterie (40) in eine Karosserie des Kraftfahrzeugs (14) eingebaut wird.

7. Verfahren nach einem der vorhergehenden Ansprüche, **dadurch gekennzeichnet, dass** das Förderfahrzeug (12) mit einem Anschluss (42) der Traktionsbatterie (40) elektrisch verbunden wird, der nicht für die Verbindung zu einem Elektromotor des Kraftfahrzeugs (14) vorgesehen ist.

8. Förderfahrzeug (12) zum Fördern eines elektrisch angetriebenen Kraftfahrzeugs (14) während der Montage des Kraftfahrzeugs, **dadurch gekennzeichnet, dass** das Förderfahrzeug (12) dazu eingerichtet ist, Energie zu nutzen, die in einer Traktionsbatterie (40) des Kraftfahrzeugs (14) gespeichert ist, und zu diesem Zwecke aufweist:
eine elektrische Schnittstelle (44), die dazu eingerichtet ist, mit der Traktionsbatterie (40) des Kraftfahrzeugs (14) verbunden zu werden, und
eine Anpassungeinheit (45), die dazu eingerichtet ist, eine von der Traktionsbatterie (40) bereitgestellte elektrische Spannung an ein Bordnetz des Förderfahrzeugs (12) anzupassen.

9. Förderfahrzeug nach Anspruch 8, **dadurch gekennzeichnet, dass** die Anpassungeinheit einen Stromrichter (45) umfasst, der dazu eingerichtet ist, eine von der Traktionsbatterie (40) über die elektrische Schnittstelle (44) bereitgestellte elektrische Spannung herabzusetzen.

10. Förderfahrzeug nach Anspruch 8 oder 9, **dadurch gekennzeichnet, dass** das Förderfahrzeug (12) einen eigenen elektrischen Antrieb (20) hat und die in der Traktionsbatterie (40) des Kraftfahrzeugs gespeicherte Energie zur Versorgung des Antriebs nutzt.

## Claims

1. Conveying method, in which a conveying vehicle (12) conveys an electrically driven motor vehicle (14) during assembly of the motor vehicle, **characterized in that** the conveying vehicle (12) uses energy which is stored in a traction battery (40) of the motor vehicle (14).

2. Method according to claim 1, **characterized in that** the conveying vehicle (12) has its own electric drive (20) and uses the energy stored in the traction battery (40) of the motor vehicle to supply the drive (20).

3. Method according to claim 2, **characterized in that** the conveying vehicle is an automated guided transport vehicle (12).

4. Method according to claim 3, **characterized in that** the transport vehicle (12) individually travels different sequences of processing stations (1801 to 1816).

5. Method according to one of the previous claims, **characterized in that** the conveying vehicle (12) has an assembly platform (15) which can be walked on by workers (16) and **in that** a tool employed by the workers (16) on the assembly platform (15) uses the energy stored in the traction battery (40) of the motor vehicle (14).

6. Method according to one of the previous claims, **characterized in that** the conveying vehicle (12) is electrically connected to the traction battery (40) at a time before the traction battery (40) is installed in a body of the motor vehicle (14).

7. Method according to one of the previous claims, **characterized in that** the conveying vehicle (12) is electrically connected to a terminal (42) of the traction battery (40) which is not provided for the connection to an electric motor of the motor vehicle (14).

8. Conveying vehicle (12) for conveying an electrically driven motor vehicle (14) during assembly of the motor vehicle, **characterized in that** the conveying vehicle (12) is configured to use energy stored in a traction battery (40) of the motor vehicle (14) and comprises for this purpose:
an electrical interface (44) configured to be connected to the traction battery (40) of the motor vehicle (14), and
an adapting unit (45) configured to adapt an electric voltage provided by the traction battery (40) to an on-board electrical system of the conveying vehicle (12).

9. A conveying vehicle according to claim 8, **characterized in that** the adapting unit comprises a power converter (45) configured to reduce an electric voltage provided by the traction battery (40) via the electrical interface (44).

10. Conveying vehicle according to claim 8 or 9, **characterized in that** the conveying vehicle (12) has its own electric drive (20) and uses the energy stored in the traction battery (40) of the motor vehicle to supply the drive.

## Revendications

1. Procédé de convoyage dans lequel un véhicule convoyeur (12) assure le convoyage d'un véhicule automobile (14) à entraînement électrique, au cours du montage dudit véhicule automobile, **caractérisé par le fait que** le véhicule convoyeur (12) tire parti d'une énergie accumulée dans une batterie de traction (40) du véhicule automobile (14).

2. Procédé selon la revendication 1, **caractérisé par le fait que** le véhicule convoyeur (12) est équipé d'un propre entraînement électrique (20) et tire parti de l'énergie, accumulée dans la batterie de traction (40) du véhicule automobile, pour alimenter ledit entraînement (20).

3. Procédé selon la revendication 2, **caractérisé par le fait que** le véhicule convoyeur est un véhicule de transport (12) sans conducteur.

4. Procédé selon la revendication 3, **caractérisé par le fait que** le véhicule de transport (12) aborde individuellement différentes successions de postes de traitement (1801 à 1816).

5. Procédé selon l'une des revendications précédentes, **caractérisé par le fait que** le véhicule convoyeur (12) est muni d'une plate-forme de montage (15) pouvant être pratiquée par des ouvriers (16) ; et **par le fait qu'**un outil, utilisé par lesdits ouvriers (16) sur ladite plate-forme de montage (15), tire parti de l'énergie accumulée dans la batterie de traction (40) du véhicule automobile (14).

6. Procédé selon l'une des revendications précédentes, **caractérisé par le fait que** le véhicule convoyeur (12) est connecté électriquement à la batterie de traction (40) à un instant précédant l'intégration de ladite batterie de traction (40) dans une carrosserie du véhicule automobile (14).

7. Procédé selon l'une des revendications précédentes, **caractérisé par le fait que** le véhicule convoyeur (12) est connecté électriquement à un raccord (42) de la batterie de traction (40) qui n'est pas prévu pour la connexion à un moteur électrique du véhicule automobile (14).

8. Véhicule convoyeur (12) affecté au convoyage d'un véhicule automobile (14) à entraînement électrique, au cours du montage dudit véhicule automobile, **caractérisé par le fait que** ledit véhicule convoyeur (12) est conçu pour tirer parti d'une énergie accumulée dans une batterie de traction (40) du véhicule automobile (14) et comprend, à cette fin :
un interface électrique (44), configuré pour être connecté à la batterie de traction (40) dudit véhicule automobile (14), et
une unité d'adaptation (45) conçue pour adapter une tension électrique, fournie par ladite batterie de traction (40), à un réseau de bord dudit véhicule convoyeur (12).

9. Véhicule convoyeur selon la revendication 8, **caractérisé par le fait que** l'unité d'adaptation inclut un convertisseur de courant (45) conçu pour faire chuter une tension électrique fournie, par la batterie de traction (40), par l'intermédiaire de l'interface électrique (44).

10. Véhicule convoyeur selon la revendication 8 ou 9, **caractérisé par le fait que** ledit véhicule convoyeur (12) est équipé d'un propre entraînement électrique (20) et tire parti de l'énergie, accumulée dans la batterie de traction (40) du véhicule automobile, pour alimenter ledit entraînement.
